# EUROPEAN PATENT APPLICATION

(11) **EP 2 816 397 A1**
(43) Date of publication of application: **24.12.2014**
(21) Application number: 14152598.0
(22) Date of filing: 27.01.2014
(51) Int. Cl.: G02F 1/1335

(54) **Liquid crystal display apparatus**

(30) Priority: 18.06.2013 KR 20130069623
(71) Applicant: Samsung Electronics Co., Ltd, Gyeonggi-do 443-742 (KR)
(72) Inventor: Lee, Sang-eun, Gyeonggi-do (KR); Lee, Young-chol, Gyeonggi-do (KR); Jang, Nae-won, Gyeonggi-do (KR); Cho, Byoung-jin, Gyeonggi-do (KR)
(74) Representative: Bray, Richard Anthony

(57) **Abstract**

A liquid crystal display (LCD) apparatus includes an LCD panel, a light source unit configured to supply light to the LCD panel, and a diffusion member interposed between the LCD panel and the light source unit and including a plurality of holes configured to diffuse the light from the light source unit.

## Description

### CROSS-REFERENCE TO RELATED APPLICATIONS

This application claims priority from Korean Patent Application No. 10-2013-0069623, filed on June 18, 2013 in the Korean Intellectual Property Office, the disclosure of which is incorporated herein by reference in its entirety.

### BACKGROUND

### Field

Apparatuses and methods consistent with exemplary embodiments relate to a liquid crystal display (LCD) apparatus, and more particularly, to a direct type LCD apparatus.

### Description of the Related Art

Flat panel display apparatuses are slim and lightweight image display apparatuses. Liquid crystal display (LCD) apparatuses have recently become the most commonly utilized type of flat panel display.

LCD apparatuses are generally classified as edge type and direct type according to arrangement of a light source unit. In edge type LCD apparatuses, a light source unit is mounted on the edge of an LCD panel, and in direct type LCD apparatuses, a light source unit is mounted behind an LCD panel. Since light source packages, such as light emitting diodes (LEDs), in direct type LCD apparatuses are uniformly spread behind the LCD panel, screen luminance can be maintained more uniformly than edge type LCD apparatuses. Accordingly, LCD apparatuses have been designed increasingly in direct type, and have become slim according to the slimness trend.

As direct type LCD apparatuses become slim, the distance between the LCD panel and the light source unit becomes close. This distance between the LCD panel and the light source unit is generally referred to as an optical distance. When the optical distance is small, the LCD apparatus has to diffuse more light than when the optical distance is large.

In related art direct type LCD apparatuses, when the optical distance is small due to slim design, existing diffusion plate and optical sheet cannot sufficiently diffuse light. As a result, dark regions are generated at portions of the LCD panel which faces portions between the light source packages so that image quality of the LCD apparatuses may be degraded.

### SUMMARY

Exemplary embodiments overcome the above disadvantages and other disadvantages not described above. Also, an exemplary embodiment is not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows.

One or more exemplary embodiments provide a direct type LCD apparatus which is slim but does not cause image quality degradation.

According to an aspect of an exemplary embodiment, there is provided a liquid crystal display (LCD) apparatus including an LCD panel, a light source unit configured to supply light to the LCD panel, and a diffusion member interposed between the LCD panel and the light source unit and including a plurality of holes configured to diffuse the light from the light source unit.

The diffusion member may accommodate the light source unit.

The LCD apparatus may further include at least one optical sheet interposed between the LCD panel and the diffusion member, and a packaging unit configured to accommodate the LCD panel, the light source unit, the diffusion member, and the optical sheet, wherein the diffusion member fills a space between the light source unit and the optical sheet in the packaging unit.

The packaging unit may include a front chassis including an opening to expose the LCD panel, and a rear chassis accommodating the LCD panel, the light source unit, the diffusion member, and the optical sheet by connection with the front chassis, and wherein the light source unit is mounted on an inner surface of the rear chassis.

The diffusion member may include at least one recessed portion to accommodate the light source unit.

The recessed portion may be spaced apart from the light source unit.

A cross section of the recessed portion may have a semicircular shape, a triangular shape, or a rectangular shape.

The light source unit may include a printed circuit board mounted on the inner surface of the rear chassis, and a plurality of light source packages mounted on the printed circuit board and spaced apart from one another, and a number of the plurality of recessed portions may correspond to a number of the plurality of light source packages.

The diffusion member may be spaced apart from the light source unit.

The diffusion member may be disposed in parallel to the LCD panel.

The LCD apparatus may further include a diffusion plate interposed between the optical sheet and the diffusion member.

The diffusion member may be made of Styrofoam or sponge.

### BRIEF DESCRIPTION OF THE DRAWING FIGURES

For a better understanding of the invention, and to show how embodiments of the same may be carried into effect, reference will now be made, by way of example, to the accompanying diagrammatic Figures in which:
FIG. 1 is an exploded perspective view of an LCD apparatus according to an exemplary embodiment;
FIG. 2 is a cross sectional view of an LCD panel assembly of the LCD apparatus shown in FIG. 1;
FIG. 3 is an enlarged cross sectional view of a left portion of the LCD panel assembly shown in FIG. 2;
FIG. 4 is a plane view of a light source unit of the LCD panel assembly shown in FIG. 2;
FIG. 5 is a cross sectional view cut along line I - I shown in FIG. 4;
FIG. 6 is a perspective view of a diffusion member of the LCD panel assembly shown in FIG. 2;
FIG. 7 is a cross sectional view of the diffusion member shown in FIG. 6;
FIGs. 8 and 9 are cross sectional view of diffusion members according to other exemplary embodiments;
FIG. 10 shows that light is emitted from the light source unit of the LCD panel assembly shown in FIG. 2 and diffuses through the diffusion member;
FIG. 11 is a cross sectional view of an LCD panel assembly according to another exemplary embodiment;
FIG. 12 is an enlarged cross sectional view of a left portion of the LCD panel assembly shown in FIG. 11;
FIG. 13 is a cross sectional view of an LCD panel assembly according to yet another exemplary embodiment; and
FIG. 14 is an enlarged cross sectional view of a left portion of the LCD panel assembly shown in FIG. 13.

### DETAILED DESCRIPTION OF EXEMPLARY EMBODIMENTS

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments can be carried out without those specifically defined matters. Also, well-known functions or constructions are not described in detail since they would obscure the invention with unnecessary detail.

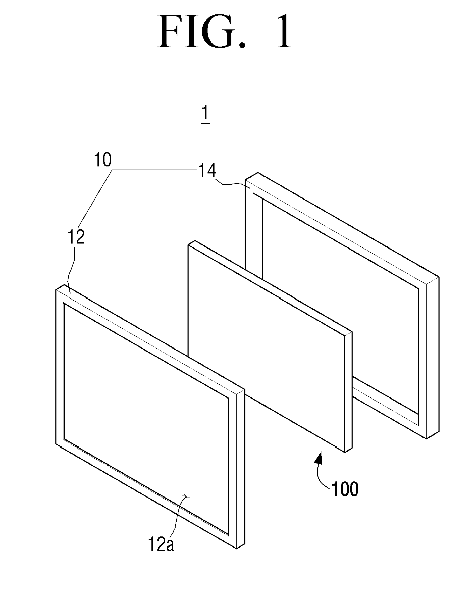

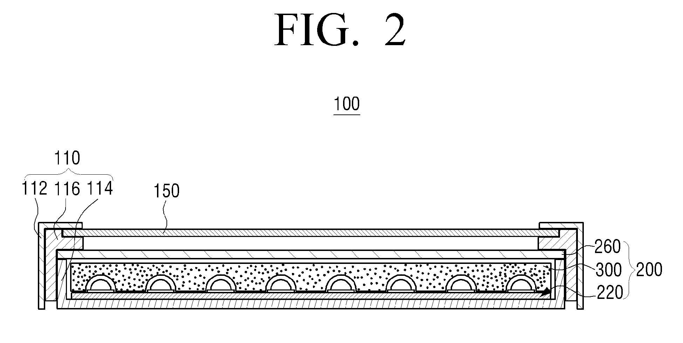

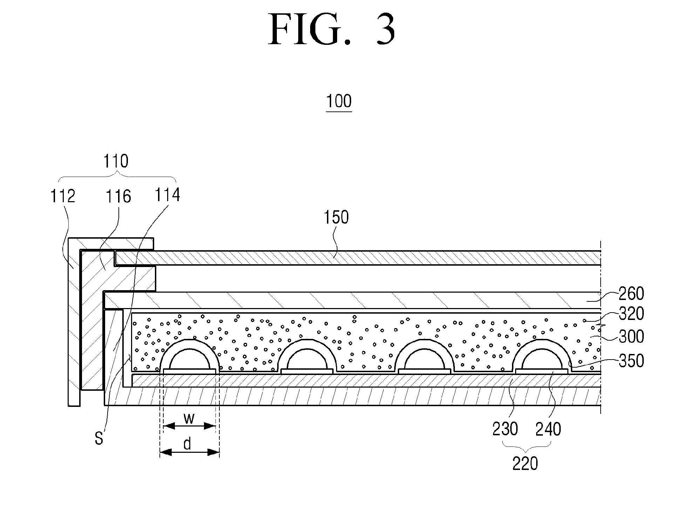

FIG. 1 is an exploded perspective view of a liquid crystal display (LCD) apparatus according to an exemplary embodiment. FIG. 2 is a cross sectional view of an LCD panel assembly of the LCD apparatus shown in FIG. 1. FIG. 3 is an enlarged cross sectional view of a left portion of the LCD panel assembly shown in FIG. 2.

With reference to FIG. 1, the LCD apparatus 1 includes a housing 10 and an LCD panel assembly 100.

The housing 10 accommodates the components of the LCD apparatus 1 such as the LCD panel assembly 100, a control board (not shown) which controls operation of the LCD panel assembly 100, and a power board (not shown) which supplies power to the LCD panel assembly 100.

The housing 10 includes a front housing 12 and a rear housing 14 which are detachably coupled together. The front housing 12 forms a front edge of the LCD apparatus 1, and has a front opening 12a in a rectangular shape to expose an image externally. The rear housing 14 has a space inside to accommodate the aforementioned components.

With reference to FIGs. 2 and 3, the LCD panel assembly 100 includes a packaging unit 110, an LCD panel 150, and a backlight unit 200.

The packaging unit 110 packages the LCD panel 150 and the backlight unit 200 as a single module, and includes a front chassis 112, a rear chassis 114, and a middle chassis 116.

The front chassis 112 and the rear chassis 114 are connected through the middle chassis 116 so that a space for accommodating the components of the LCD panel assembly 100 may be provided therein. In addition, the front chassis 112 has an opening to view an image on the LCD panel 150 from the outside.

The middle chassis 116 supports some components of the LCD panel assembly 100 together with the front chassis 112 and the rear chassis 114. To do so, the middle chassis 116 is provided between the front chassis 112 and the rear chassis 114 on the edge of the LCD panel assembly 100.

The LCD panel 150 displays a color image using light from the backlight unit 200. The LCD panel 150 includes a color filter substrate (not shown) including a color filter layer, and a thin film transistor (TFT) substrate (not shown) including a TFT. A liquid crystal (not shown) is provided between the color filter substrate and the TFT substrate. Since configurations of the LCD panel 150 are well known in the art, detailed description thereof is omitted here.

The backlight unit 200 supplies light to the LCD panel 150, and includes a light source unit 220, an optical sheet 260, and a diffusion member 300.

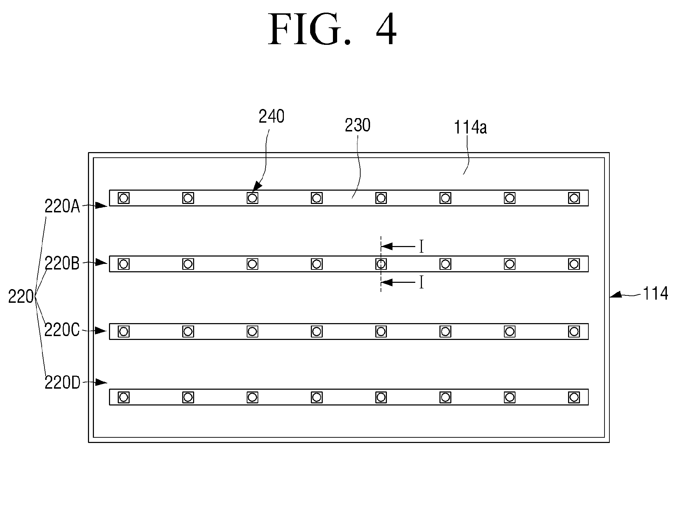

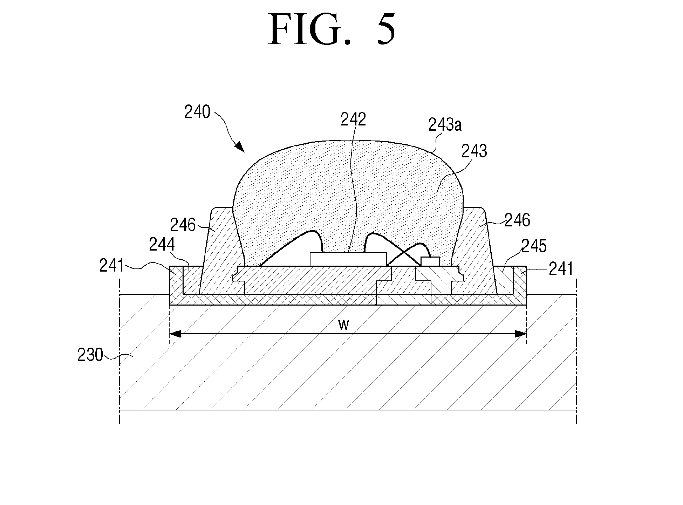

The light source unit 220 is provided in parallel with the LCD panel 150 behind the LCD panel 150. That is, the light source unit 220 according to the exemplary embodiment a direct type LCD panel. The light source unit 220 is described below in greater detail with reference to FIGs. 4 and 5.

FIG. 4 is a plane view of the light source unit of the LCD panel assembly shown in FIG. 2, and FIG. 5 is a cross sectional view cut along line I - I shown in FIG. 4.

With reference to FIG. 4, a plurality of light source units 220 are provided. Each light source unit 220A to 220D are provided on a lower surface 114a of the rear chassis 114. Each light source unit 220A to 220D includes a printed circuit board 230 having a rectangular plate shape, and a plurality of light source packages 240 which are mounted on the printed circuit board 230 to generate light.

The printed circuit board 230 supports the plurality of light source packages 240 mounted thereon, and supplies power from a power source (not show) to the light source packages 240.

The light source packages 240 emit light to the LCD panel 150. The structure of the light source package 240 is described with reference to FIG. 5.

With reference to FIG. 5, the light source package 240 is mounted on the printed circuit board 230 using a solder 241, and includes a light emitting diode (LED) 242, a fluorescent body 243, a pair of electrodes 244 and 245, and a frame 246.

The LED 242 is an element that generates light as it is known. The fluorescent body 243 converts light of particular color generated by the LED 242 into another color (for example, white color) suitable for a purpose of the light source unit 220. In addition, the fluorescent body 243 broadly diffuses the light through an external surface 243a of convex lens shape. Alternatively, an optical lens (not shown) provided to cover the light source package 240 may replace light diffusion of the fluorescent body 243. The pair of electrodes 244 and 245 connect the LED 242 and the printed circuit board 230 electrically. The frame 246 packages the LED 242, the fluorescent body 243, and the pair of electrodes 244 and 245.

With reference to FIGs. 2 and 3, the optical sheet 260 is provided between the LCD panel 150 and the diffusion member 300, and is fixed by the rear chassis 114 and the middle chassis 116. The optical sheet 260 may include a plurality of sheets such as a diffusion sheet and a prism sheet. The optical sheet 260 diffuses light from the diffusion member 300 and improves luminance.

The diffusion member 300 diffuses light from the light source unit 220, and is provided between the LCD panel 150 and the light source unit 220, and more specifically, between the light source unit 220 and the optical sheet 260. The diffusion member 300 fills a space (S) between the light source unit 220 and the optical sheet 260, and thus surrounds the light source unit 220.

The diffusion member 300 has a plurality of hollow cells or air holes 320 to diffuse the light from the light source unit 220. The plurality of air holes 320 are uniformly dispersed in the diffusion member 300. The light from the light source unit 220 passes through the plurality of air holes 320 and is evenly diffused by the diffusion member 300.

The diffusion member 300 may be made of general Styrofoam or sponge having the plurality of air holes 320. The diffusion member 300 may also be made of any other substances having the plurality of air holes 320.

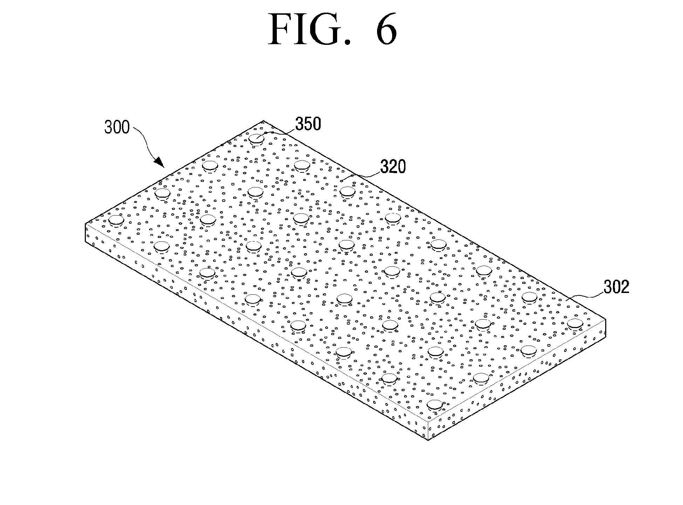

With reference to FIGs. 6 to 9, the diffusion member 300 is described in greater detail.

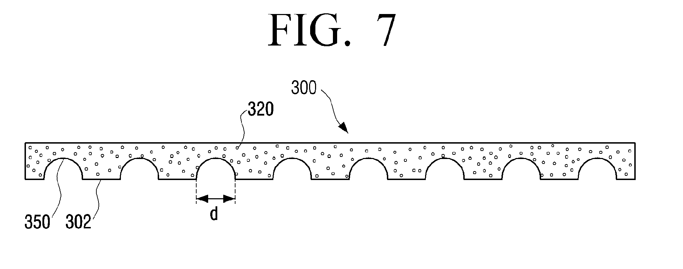

FIG. 6 is a perspective view of the diffusion member of the LCD panel assembly shown in FIG. 2, FIG. 7 is a cross sectional view of the diffusion member shown in FIG. 6, and FIGs. 8 and 9 are cross sectional view of diffusion members according to other exemplary embodiments.

With reference to FIGs. 6 and 7, a plurality of recessed portions 350 are provided on a lower surface 302 of the diffusion member 300. The plurality of recessed portions 350 are arranged to correspond to the light source packages 240 (see FIG. 4) of the plurality of light source units 220 (see FIG. 4).

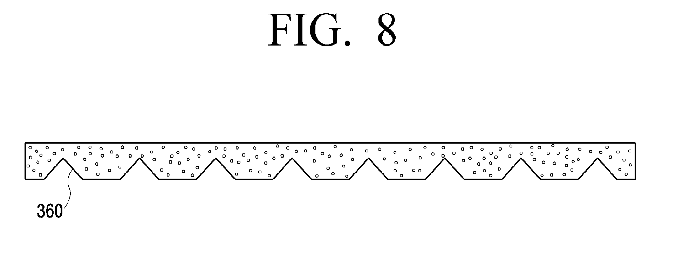

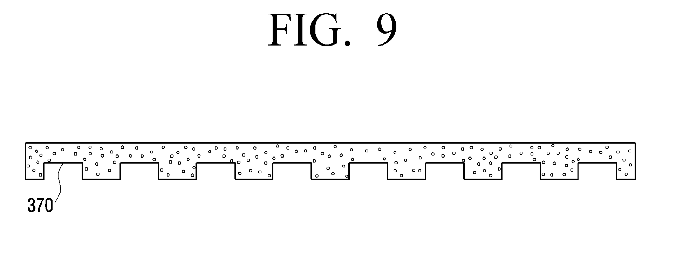

A cross section of the recessed portion 350 has a semicircular shape to correspond to a cross section of the light source package 240, but is not limited thereto. For example, as shown in FIG. 8, recessed portions 360 may have a triangular shape, or as shown in FIG. 9, recessed portions 370 may has a rectangular shape. It is possible to form a cross section of the recessed portion 350 in any other forms capable of surrounding the light source packages 240.

With reference to FIG. 3 again, the diameter (D) of the recessed portion 350 is greater than the width (W) of the light source package 240 to surround the light source package 240. The sidewall of the recessed portion 350 is spaced apart from the light source package 240 so that the light source package 240 can emit light smoothly.

The operation of diffusing the light from the light source unit 220 through the diffusion member 300 is described in greater detail.

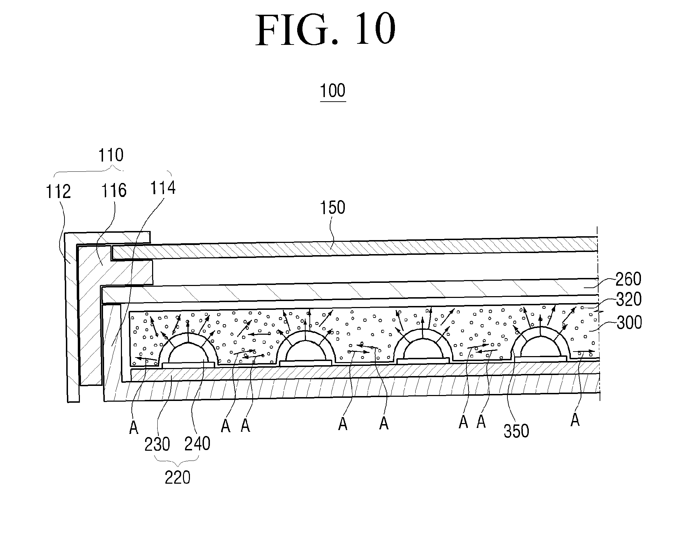

FIG. 10 shows that light is emitted from the light source unit of the LCD panel assembly shown in FIG. 2 and diffuses through the diffusion member.

With reference to FIG. 10, the light passes through the plurality of air holes 320 of the diffusion member 300 and thereby diffuses uniformly.

Since the diffusion member 300 is provided to surround the light source packages 240 and to fill the space S between the light source unit 220 and the optical sheet 260 in the rear chassis 114 as described above, the diffusion member 300 may diffuse the light consistently and uniformly until the light arrives from the light source packages 220 to the optical sheet 260. Accordingly, in this exemplary embodiment, light diffusion (A) between the light source packages 220 is enabled smoothly.

In this exemplary embodiment, since the light diffuses uniformly even in spaces between the light source packages 220, dark regions are not generated at portions of the LCD panel 150 which faces the spaces between the light source packages 220. Accordingly, although the LCD apparatus 1 (see FIG. 1) according to this exemplary embodiment becomes slim, image quality degradation such as dark regions may not occur.

In addition, in the LCD apparatus 1 according to this exemplary embodiment, the diffusion member 300 having the plurality of air holes 320 may be made of inexpensive general Styrofoam or sponge so that manufacturing cost may be saved and manufacturing efficiency may increase.

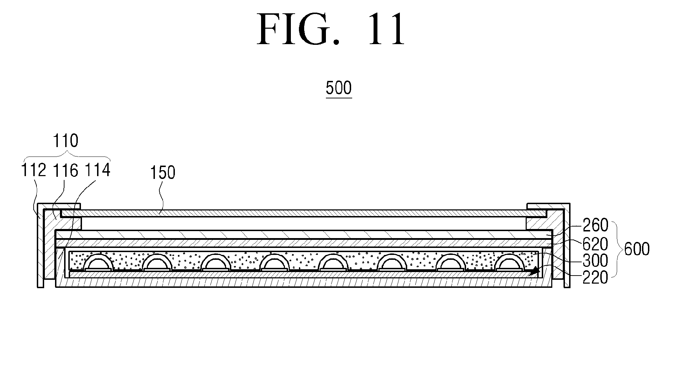

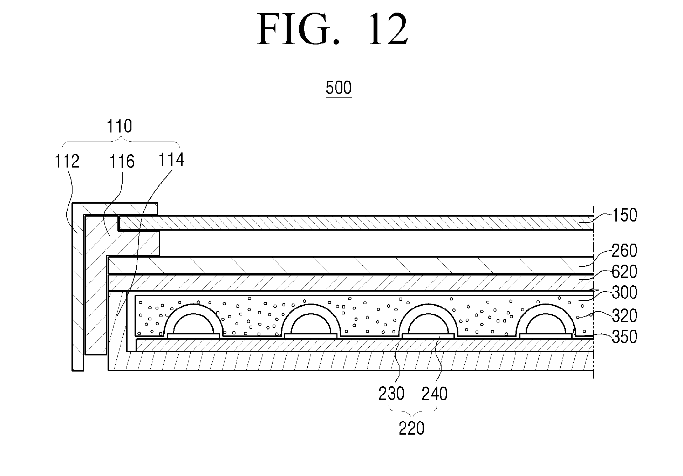

FIG. 11 is a cross sectional view of an LCD panel assembly according to another exemplary embodiment, and FIG. 12 is an enlarged cross sectional view of a left portion of the LCD panel assembly shown in FIG. 11.

With reference to FIGs. 11 and 12, the LCD panel assembly 500 includes a packaging unit 110, an LCD panel 150, and a backlight unit 600.

Since the packaging unit 110 and the LCD panel 150 have substantially the same forms and functions as those in the aforementioned exemplary embodiment, the same reference numbers are used and descriptions thereof is omitted.

The backlight unit 600 includes a light source unit 220, an optical sheet 260, a diffusion member 300, and a diffusion plate 620.

Since the light source unit 220, the optical sheet 260, and the diffusion member 300 have substantially the same forms and functions as those in the aforementioned exemplary embodiment, the same reference numbers are used and description thereof is omitted.

The diffusion plate 620 is provided between the optical sheet 260 and the diffusion member 300. The diffusion plate 620 uniformly diffuses the light passing through the diffusion member 330 again.

In this exemplary embodiment, since the diffusion plate 620 is further included in addition to the diffusion member 300, diffusion efficiency of the light emitted from the light source unit 220 may increase more.

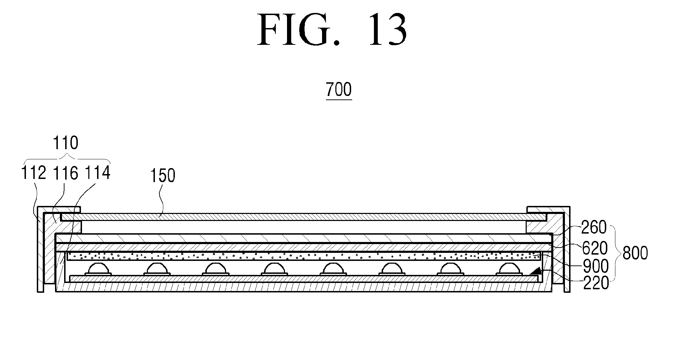

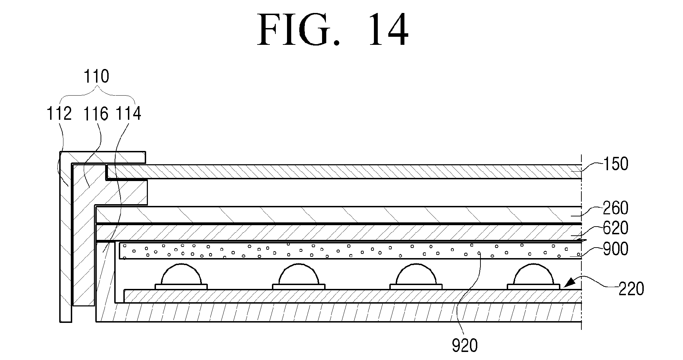

FIG. 13 is a cross sectional view of an LCD panel assembly according to yet another exemplary embodiment, and FIG. 14 is an enlarged cross sectional view of a left portion of the LCD panel assembly shown in FIG. 13.

With reference to FIGs. 13 and 14, the LCD panel assembly 700 includes a packaging unit 110, an LCD panel 150, and a backlight unit 800.

Since the packaging unit 110 and the LCD panel 150 have substantially the same forms and functions as those in the aforementioned exemplary embodiment, the same reference numbers are used and description thereof is omitted.

The backlight unit 800 includes a light source unit 220, an optical sheet 260, a diffusion plate 620, and a diffusion member 900.

Since the light source unit 220, the optical sheet 260, and the diffusion plate 620 have substantially the same forms and functions as those in the aforementioned exemplary embodiment, the same reference numbers are used and description thereof is omitted.

The diffusion member 900 is spaced apart from the light source unit 260, and is provided in parallel with the LCD panel 150. The diffusion member 900 has a hexahedral shape, and has a plurality of air holes 920. The diffusion member 900 may be made of Styrofoam or sponge as described above.

Since the diffusion member 900 consistent with this exemplary embodiment does not have a plurality of recessed portions unlike the diffusion member 300 consistent with the above exemplary embodiments, it is easier to manufacture the diffusion member 900. Accordingly, manufacturing cost and time may be saved.

According to the above exemplary embodiments, a direct type LCD apparatus is slim but does not cause image quality degradation.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A liquid crystal display (LCD) apparatus comprising:
an LCD panel configured to display an image;
a light source unit disposed behind the LCD panel and configured to supply light to the LCD panel; and
a diffusion member interposed between the LCD panel and the light source unit and including a plurality of air holes to diffuse the light from the light source unit.

2. The LCD apparatus as claimed in claim 1, wherein the diffusion member surrounds the light source unit.

3. The LCD apparatus as claimed in claim 2, further comprising:
at least one optical sheet interposed between the LCD panel and the diffusion member; and
a packaging unit configured to accommodate the LCD panel, the light source unit, the diffusion member, and the optical sheet,
wherein the diffusion member fills a space between the light source unit and the optical sheet in the packaging unit.

4. The LCD apparatus as claimed in claim 2, wherein the packaging unit comprises:
a front chassis including an opening to expose an image of the LCD panel to the outside; and
a rear chassis configured to provide a space for accommodating the LCD panel, the light source unit, the diffusion member, and the optical sheet by connection with the front chassis, and
wherein the light source unit is mounted on an inner surface of the rear chassis.

5. The LCD apparatus as claimed in claim 4, wherein the diffusion member includes at least one recessed portion to surround the light source unit.

6. The LCD apparatus as claimed in claim 5, wherein the recessed portion is spaced apart from the light source unit.

7. The LCD apparatus as claimed in claim 5, wherein a cross section of the recessed portion has a semicircular shape, a triangular shape, or a rectangular shape.

8. The LCD apparatus as claimed in claim 5, wherein the light source unit comprises:
a printing circuit board mounted on the inner surface of the rear chassis; and
a plurality of light source packages spaced apart from one another and mounted on the printing circuit board, and
wherein a number of the plurality of recessed portions corresponds to a number of the plurality of light source packages.

9. The LCD apparatus as claimed in claim 1, wherein the diffusion member is spaced apart from the light source unit.

10. The LCD apparatus as claimed in claim 9, wherein the diffusion member is provided in parallel to the LCD panel.

11. The LCD apparatus as claimed in claim 1, further comprising:
a diffusion plate interposed between the optical sheet and the diffusion member.

12. The LCD apparatus as claimed in claim 1, wherein the diffusion member is made of Styrofoam or sponge.
